# EUROPEAN PATENT APPLICATION

(11) **EP 2 774 903 A1**
(43) Date of publication of application: **10.09.2014**
(21) Application number: 12846196.9
(22) Date of filing: 24.10.2012
(51) Int. Cl.: C04B 35/119, C04B 35/48, C04B 35/10, C01G 25/02

(54) **NANOSTRUCTURED COMPOSITE METAL OXIDE MATERIAL, PRODUCTION METHOD AND USE**

(30) Priority: 04.11.2011 ES 201131767 P
(71) Applicant: Consejo Superior De Investigaciones Científicas, 28006 Madrid (ES)
(72) Inventor: DÍAZ RODRÍGUEZ, Luís Antonio, E-33428 Llanera (Asturias) (ES); TORRECILLAS SAN MILLAN, Ramón, E-33428 Llanera (Asturias) (ES); FERNÁNDEZ VALDÉS, Adolfo, E-33428 Llanera (Asturias) (ES); SUAREZ MENÉNDEZ, Marta, E-33428 Llanera (Asturias) (ES); SCHEHL, Martin Rudolf, E-33428 Llanera (Asturias) (ES)
(74) Representative: Pons Ariño, Angel
(86) International application number: PCT/ES2012/070745
(87) International publication number: WO 2013/064713

(57) **Abstract**

The present invention relates to a nanostructured zirconia alumina compound material which is characterized in that the content of different elements of Al, Zr, Hf, Y, Ce and O is less than 100 ppm, the Cl content is less than 1 ppm, at least one of the components has a mean grain size in the final material of less than 500 nm, and at least 1 /10 of the particles is in an intragranular position. A further subject matter of the invention is the method for producing said material and also the use thereof.

## Description

The present invention relates to an alumina-zirconia nanostructured composite material and to a process for obtaining oxidic nanostructured ceramic composite materials with excellent mechanical properties which make them very suitable for applications such as knee prostheses, hip prostheses, dental implants, mechanical components for pumps, alkaline batteries, ceramic components for stereotactic surgery, cutting tools, etc.

### STATE OF THE ART

The excellent mechanical properties that characterise ceramic materials, such as hardness, fracture resistance or toughness, make them ideal candidates for various applications, from grinding balls to biomedical implants. One type of ceramic materials that are especially interesting for the manufacturing of different prostheses and implants are those pertaining to the alumina-zirconia system. These types of materials are perfectly biocompatible, which has resulted in a growing interest in the use thereof, to replace the traditionally-used metallic materials. The development of alumina-zirconia composite materials appeared in response to the limitations exhibited by monolithic materials.

Thus, although alumina was one of the first ceramic materials used for orthopaedic purposes [US 3977026], its fragility caused a high failure rate, which resulted in disregarding this material and searching for other ceramic components that overcame these limitations. Amongst the possible alternatives, zirconium oxide (ZrO₂), or zirconia, is noteworthy for its high toughness. The improvement in the toughness values of zirconia materials has been widely described in the literature as a toughening mechanism by phase transformation, which involves the transformation of the metastable tetragonal phase (t) of zirconia into the stable monoclinic phase (m) at room temperature, with the consequent volume expansion, which causes significant compressive stresses. In an attempt to prevent this reversible transformation from the tetragonal phase (high temperature) to the monoclinic phase (room temperature), zirconia is usually doped with certain proportions of oxides such as CaO, MgO, Y₂O₃, CeO₂, which make it possible to retain the tetragonal structure at room temperature and, therefore, control the stress induced by the t-m transformation by hindering crack propagation, with the consequent increase in the toughness of the material [Nelly, J.B., and Denry, I., Dental Materials, 24, 289-298, (2008)]. As a result of these excellent properties, until the year 2005, more than half a million units of this type of prostheses had been implanted both in the USA and Europe. However, the metastable character of tetragonal zirconia induce spontaneous transformation into monoclinic zirconia as a result of processes such as the machining of sintered parts, and even the polishing thereof, with the consequent destabilisation of the ceramic component. Moreover, zirconia undergoes a process known as ageing, characterised by the degradation of its mechanical properties with time. The ageing phenomenon is reflected in the progressive spontaneous transformation of the metastable tetragonal phase into the monoclinic phase, and is favoured by the presence of water or steam [Yoshimura, M., et al., J. Mater. Sci. Lett., 6, 465-467, 1987], [Tsukuma, K., et al., In Advances in Ceramics, 12, The American Ceramic Society, Columbus, 382-398, 1984], [Masaki, T., Int. J. High Technol. Ceram., 2, 85-98, 1986], [Chevalier, J., et al., J. Am. Ceram. Soc., 82, 2150-2154, 1999]. The increase in the monoclinic phase content leads to a decrease in resistance, toughness and density, followed by the appearance of micro- and macro-cracks. As a result of this behaviour, there are numerous bibliographical reviews were the use of zirconia for this type of applications is evaluated[Chevalier, J., Biomaterials 27 (4), 535-543, 2006], [Hisbergues, M., et al., Journal of Biomedical Materials Research - Part B Applied Biomaterials 88 (2), 519-529, 2009].

The solution to these problems involves developing materials that use reinforcement mechanisms in order to improve the mechanical properties of zirconia and do not suffer the aforementioned problems. Amongst the possible materials, alumina-zirconia composites have acquired special relevance. Two types of alumina-zirconia composites may be distinguished: materials made of a zirconia matrix reinforced with alumina particles and materials made of an alumina matrix reinforced with zirconia particles, both of which improve the mechanical properties with respect to monolithic materials. In the conventional processing routes for obtaining these materials, the desired composition is prepared by the mechanical mixing of powders from both components [US 9841274]. The greatest limitation of this synthesis route is the difficulty in obtaining very fine grain sizes and a homogeneous distribution of the phases. One noteworthy exception is the process disclosed in US 7012036, for obtaining alumina-Ce-TZP composite materials with a nanostructure that the authors describe as dual. The processing of this nanocomposite is performed by the traditional powder mixing method, in this case using nanometric-type powders, and the microstructure of this material is characterised by the presence of a first group of ceria-stabilised zirconia grains within which alumina crystals are dispersed as a second phase; in turn, these crystals contain smaller stabilised zirconia crystals.

A very interesting alternative to the powder mixing processing method are chemical synthesis routes such as sol-gel [Sarkar, D., et al., J. Mater. Sci., 42, 1847-55, 2007], co-precipitation [Upadhyaya, D. et al., Mater. Sci. Eng. A, A270, 133-136, 1999] and thermal decomposition of salt mixtures [Chandradass, J., et al., Mater. Sci. Eng. A, A473, 360-364, 2008]. One of the most significant advantages of these synthesis methods is the homogeneity achieved in the distribution of the different phases. On the contrary, the main disadvantages are the product yield obtained and the increased cost of the process as a consequence of the precursors used. An intermediate method between traditional processing methods and chemical methods is the surface modification of nanopowders with precursor solutions. Among the different works available in the literature it is worth mentioning [M. Schehl, L.A. Díaz and R. Torrecillas, Acta Materialia; 50 [5], 1125-1139, 2002], which describes significant increases in fracture toughness (KIC) with respect to the values of monolithic alumina, reaching values up to 6.5 MPam^{1/2}. These improvements in toughness are accompanied by an increase in the threshold stress intensity factor, KIO, below which there is no crack propagation risk, so that the KIC and KIO values in the resulting materials are very close to one another [J. Chevalier, et al. 5-7, 1297-1301, 2005]. One process for obtaining alumina-zirconia nanocomposites wherein both components are in the nanometric scale is disclosed in WO 2011015697. In this case, alumina and ceria-stabilised zirconia nanopowders on the one hand, and aluminum chloride and zirconium propoxide, on the other, are used, as alumina and zirconia precursors, respectively, in order to perform the surface modification of the nanopowders. This processing route makes it possible to simultaneously obtain toughness and fracture resistance values above the biomedical standards for monolithic alumina and zirconia prostheses.

The present invention proposes a new process for obtaining nanostructured ceramic oxide materials. Firstly, the use of precursors from the carbonate family prevents the generation of acidic by-products (chlorides, nitrates, etc.) and, secondly, the adjustment of the reaction conditions during the surface modification makes it possible to greatly reduce the number of steps necessary for preparing the material (grinding, sieving, calcination, etc.). I.e. the present invention proposes the obtainment of high-purity nanostructured ceramic materials by means of an inexpensive, simple and environmentally-friendly process.

Other advantages of the invention arise from the *in situ* generation of the nanoparticles, which favours their presence in intragranular positions, in addition to eliminating the risks during the manipulation thereof. On the other hand, in the case of materials with zirconia, the stabilisation of zirconia by the incorporation of elements in solid solution may be avoided, since the tetragonal phase may be directly retained, as the particle size is smaller than the critical size necessary for spontaneous transformation into the monoclinic phase.

### DESCRIPTION OF THE INVENTION

In the first place, the present invention relates to an alumina-zirconia nanostructured composite material, with certain microstructural characteristics that provide it with a mechanical performance that is superior to that of currently-known materials. Another object of the invention is the process for obtaining said material and the applications thereof.

Thus, a first object of the present invention relates to an alumina-zirconia nanostructured composite material (hereinafter "material of the invention") characterised in that the content of elements other than Al, Zr, Hf, Y, Ce and O is less than 100 ppm, the Cl content is less than 1 ppm, at least one of the components has a mean grain size in the final material smaller than 500 nm, and at least 1/10 of the particles are in the intragranular position.

In the present invention, composite materials are understood to be those that have the following properties:
- they are made up of 2 or more components that at first glance are physically indistinguishable and are not mechanically separable;
- they present several mineralogically different phases, which are completely insoluble and are separated by an interphase;
- their mechanical properties are greater to the simple sum of the properties of their components (synergy);
- the term "nanostructured" refers to a structure with an intermediate size between molecular and microscopic structures (of a nano-micrometric size);

In a preferred embodiment of the material of the invention, the relative composition of the material is:
a) between 80% and 99.5% by volume of α-alumina;
b) between 0.5% and 20% by volume of pure zirconia nanoparticles without any elements in solid solution and with a mean particle size smaller than 200 nm.

In another preferred embodiment of the material of the invention, the relative composition of the material is:
a) between 70% and 99.5% by volume of zirconia stabilised by means of a solid solution of yttrium oxide or cerium oxide;
b) between 0.5% and 30% by volume of α-alumina nanoparticles with a mean particle size smaller than 150 nm.

In another preferred embodiment of the material of the invention, the composition of the material is:
a) between 20% and 89.5% by volume of a-alumina with a particle size smaller than 500 nm;
b) between 10% and 79.5% by volume of zirconia stabilised by means of a solid solution of yttrium oxide or cerium oxide, with a mean particle size smaller than 350 nm;
c) between 0.5% and 10% by volume of pure zirconia nanoparticles without any elements in solid solution and with a mean particle size smaller than 100 nm.

The alumina-zirconia nanostructured composite material is characterised in that it has a bending strength, a threshold stress intensity factor and fracture toughness greater than 500 MPa, 4 MPam^{1/2} and 6 MPam^{1/2}, respectively.

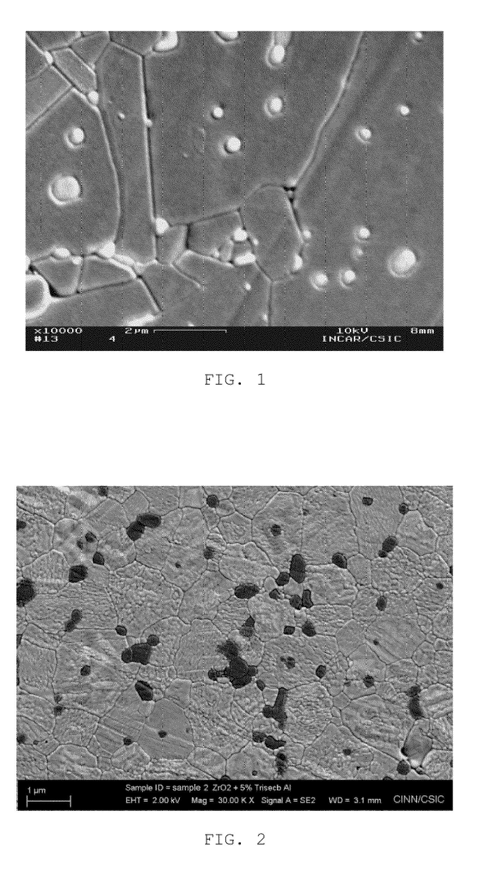

A second object of the present invention relates to a process for obtaining alumina-zirconia materials characterised in that the content of elements other than Al, Zr, Hf, Y, Ce and O is less than 100 ppm, the Cl content is less than 1 ppm, at least one of the components has a mean grain size in the final material smaller than 500 nm, and at least 1/10 of the particles are in the intragranular position (Figures 1, 2 and 3), where said process comprises the following steps:
a) mixing at least one suspension of ceramic oxide powder with a metal carbonate, preferably selected from aluminum and zirconium;
b) adjusting the pH of the mixture prepared in step (a);
c) drying the suspension obtained in step (b);
d) shaping the powder obtained in step (c);
e) sintering the shaped powder obtained in step (d).

The inventors have developed a process for obtaining nanostructured composite materials in the Al₂O₃-ZrO₂ system by means of the *in situ* generation of nanoparticles on the surface of nanopowder suspensions through the chemical decomposition of carbonates. This process takes advantage of the solubility of the aluminum and zirconium carbonates used in this work in acidic environments. Under these conditions, CO₂ is released and molecular entities of the corresponding hidroxides are generated, which nucleate on the surface of the nanopowder suspension. Two main advantages of this processing route are worth noting. On the one hand, thanks to the use of carbonates as precursors of the second phases, under the experimental working conditions, residues in the material are not generated thus avoiding additional processing steps for eliminating such residues. On the other hand, the only modification with respect to the sequence of steps necessary to prepare a ceramic material following the traditional way, even in the case of monolithic materials, is the incorporation of the adequate quantity of the carbonate-type precursor when the ceramic suspension is prepared and adjusting the adequate pH. The different nanopowder-metal carbonate combinations result in different compositions of the material of the invention described above.

The process for obtaining the alumina-zirconia nanostructured powders of the present invention is preferably performed from the following starting materials:
- ceria-stabilised zirconia powder (Ce-TZP), with a total molar concentration of ceria ranging between 10%-14% and a mean particle size ranging between 0.05 and 1 µm, or yttria-stabilised zirconia powder (Y-TZP), with a molar concentration of yttria ranging between 2%-7% and a mean particle size ranging between 0.05 and 1 µm;
- aluminum carbonate;
- alumina powder with a mean particle size ranging between 0.01 and 1 µm;
- zirconium carbonate;
- acetic acid;
- de-ionised water, as the solvent medium.

In a typical experiment, the carbonate that acts as the precursor of the second component is added to a ceramic powder suspension, either directly on the dispersion or previously dissolved in water. The pH is regulated with an acid solution, such that it is possible to modify it in a controlled manner; for example, 0.05 pH units per drop of acid solution. Subsequently, processing of the ceramic suspension continues according to the conventionally-used processes.

In a preferred embodiment of the process of the invention, the ceramic oxide powder in step (a) is α-Al₂O₃ and it is mixed with zirconium carbonate in an aqueous suspension.

In another preferred embodiment of the process of the invention, in step (a), a Ce-TZP or Y-TZP suspension is mixed with aluminum carbonate in an aqueous suspension. In another preferred embodiment of the process of the invention, in step (a), two aqueous suspensions are mixed, a solution of α-Al₂O₃ with zirconium carbonate and a solution of Ce-TZP or Y-TZP with aluminum carbonate.

In another preferred embodiment of the process of the invention, in step (a), the total solids content is less than 85% by weight and the mixture is kept under stirring by means of any magnetic or mechanical device that favours dispersion.

In another preferred embodiment of the process of the invention, in step (b), an organic or inorganic acid is added until the pH of the suspension is less than 6. Preferably, the acid used in step (b) is acetic acid.

In another preferred embodiment of the process of the invention, in step (c), the drying is performed by means of spray-drying or freeze-drying.

In another preferred embodiment of the process of the invention, step (d) is performed by means of any shaping method for ceramic suspensions, such as slip casting, pressure casting or tape casting. In a particular embodiment, the shaping of step (d) is performed by means of cold isostatic pressing. This cold isostatic pressing is preferably performed by applying a pressure ranging between 100 and 400 MPa.

In another preferred embodiment of the process of the invention, step (e) is performed at a maximum temperature ranging between 1400°C and 1600°C.

Moreover, a final object of the present invention relates to the use of the material of the invention for the manufacturing of a product selected from the list that comprises knee prostheses, hip prostheses, dental implants, mechanical components for pumps, alkaline batteries, ceramic components for stereotactic surgery and cutting tools.

Throughout the description and the claims, the word "comprises" and the variants thereof are not intended to exclude other technical characteristics, additives, components or steps. For persons skilled in the art, other objects, advantages and characteristics of the invention will arise partly from the description and partly from the practice of the invention. The following examples and drawings are provided for illustrative purposes, and are not intended to limit the scope of the present invention.

### BRIEF DESCRIPTION OF THE FIGURES

Figure 1.- Microstructure obtained by means of a scanning electronic microscope of the composite material resulting from example 1.
Figure 2.- Microstructure obtained by means of a scanning electronic microscope of the composite material resulting from example 2.
Figure 3.- Microstructure obtained by means of a scanning electronic microscope of the composite material resulting from embodiment example 3.

### EXAMPLES OF THE INVENTION

The following examples are presented as an additional guide for average skilled persons in the art and are in no way intended to limit the scope of the invention.

In order to achieve a better understanding of the object and functionality of this patent, and without understanding them to be restrictive solutions, three examples of compositions will be described.

### Example 1. Alumina material with 5% by volume of ZrO₂ nanoparticles.

The starting raw materials are:
- α-Al₂O₃ powder, TM-DAR, from the company Taimei, with a mean particle size < 160 nm and a density of 3.90 g/cm³;
- Zirconium carbonate (CAS: 520217);
- De-ionised water;
- Aqueous solution of acetic acid (0.5 M).

50 g of Al₂O₃ were used, which were dispersed in 100 g of de-ionised water. Subsequently, 5 g of zirconium carbonate are added to the suspension and it is kept under stirring. Subsequently, a 0.5 M acetic acid solution is added drop by drop until the pH of the suspension is 4.5. The stirring is maintained for one hour and, thereafter, the suspension is dried by means of spray-drying, to obtain a granulated nanocomposite powder.

The dry product was subjected to a shaping process by means of cold isostatic pressing at 200 MPa. A shaped material is obtained which is sintered in a conventional air furnace at a maximum temperature of 1550°C, during 120 minutes. The heating cycle performed involved in three steps; heating to 800°C at 1°C/min, dwell time of 60 min at 800°C and heating to 1550°C at 5°C/min. After remaining at the maximum temperature, the cooling is controlled at 5°C/min to a temperature of 700°C and, from this temperature, the furnace is allowed to cool down freely.

The resulting material was characterised by its real density (helium pycnometry), bulk density (Archimedes method), fracture strength (four-point bending method), toughness (KIC) and threshold stress intensity factor (KIO) (double-torsion method), and microstructural analysis (scanning electronic microscope). The results are shown in Table 1. The micrography obtained by electronic microscopy is represented in Figure 1.

**Table 1**

| **Property** | **Ex. 1** | **Ex. 2** | **Ex. 3** |
|---|---|---|---|
| Relative density (% theoretical density) | 99.0 | 99.3 | 99.1 |
| Toughness K_{IC} (MPa.m^{1/2}) | 6.3 | 6.6 | 7.5 |
| Toughness K_{IO} (MPa.m^{1/2}) | 4.9 | 4.2 | 5.1 |
| Bending strength σ_{f} (MPa) | 550 | 825 | 630 |

### Example 2. 3Y-TZP material with 5% by volume of Al₂O₃ nanoparticles.

The starting raw materials are:
- ZrO₂ powder (3% molar of Y₂O₃), 3Y-TZP from the company Tosoh, with a specific surface area of 16 m²/g;
- Aluminum carbonate (CAS:14455-29-9);
- De-ionised water;
- Aqueous solution of acetic acid (0.5 M).

50 g of ZrO₂ were used, which were dispersed in 100 g of de-ionised water. Subsequently, 4 g of aluminum carbonate are added to the suspension and it is kept under stirring. Thereafter, a 0.5 M acetic acid solution is added drop by drop until the pH of the suspension is 4.0. The stirring is maintained for one hour and, subsequently, the suspension is dried by means of spray-drying, to obtain a granulated nanocomposite powder.

The dry product was subjected to a shaping process by means of cold isostatic pressing at 200 MPa. The shaped material obtained is sintered in a conventional air furnace at a maximum temperature of 1500°C, for 120 minutes. The heating cycle performed involved in three steps: heating to 800°C at 1°C/min, dwell time of 60 min at 800°C and heating to 1500°C at 5°C/min. After remaining at the maximum temperature, the cooling is controlled at 5°C/min to a temperature of 700°C and, from this temperature, the furnace is allowed to cool down freely.

The resulting material was characterised by its real density (helium pycnometry), bulk density (Archimedes method), fracture strength (four-point bending method), toughness (KIC) and threshold stress intensity factor (KIO) (double-torsion method), and microstructural analysis (scanning electronic microscope). The results pertaining to these characterisations are shown in Table 1. The micrography obtained by electronic microscopy is represented in Figure 2.

### Example 3. Alumina-zirconia composite material (50/50 vol%)

The starting raw materials are:
- α-Al₂O₃ powder, TM-DAR, from the company Taimei, with a mean particle size < 160 nm and a density of 3.90 g/cm³;
- Zirconium carbonate (CAS:520217);
- ZrO₂ powder (3% molar of Y₂O₃), 3Y-TZP, from the company Tosoh, with a specific surface area of 16 m²/g;
- Aluminum carbonate (CAS:14455-29-9);
- De-ionised water;
- Aqueous solution of acetic acid (0.5 M).

Two suspensions were previously prepared according to embodiment examples 1 and 2: one of them starting from 25 g of alumina and 2.5 g of zirconium carbonate, and the other from 25 g of zirconia and 2 g of aluminum carbonate. Once the pH has been adjusted, in both cases, to a value of 4.0 by the drop-by-drop addition of a 0.5 M acetic acid solution, and after keeping them under stirring for one hour, they are mixed. The stirring is maintained for one more hour, and, subsequently, the resulting mixture is dried by means of spray-drying, to obtain a granulated nanocomposite powder.

The dry product was shaped by means of cold isostatic pressing at 200 MPa. The resulting shaped material is sintered in a conventional air furnace at a maximum temperature of 1550°C, for 120 minutes. The heating cycle performed involved in three steps:: heating to 800°C at 1°C/min, dwell time of 60 min at 800°C and heating to 1550°C at 5°C/min. After remaining at the maximum temperature, the cooling is controlled at 5°C/min to a temperature of 700°C and, from this temperature, the oven is allowed to cool down freely.

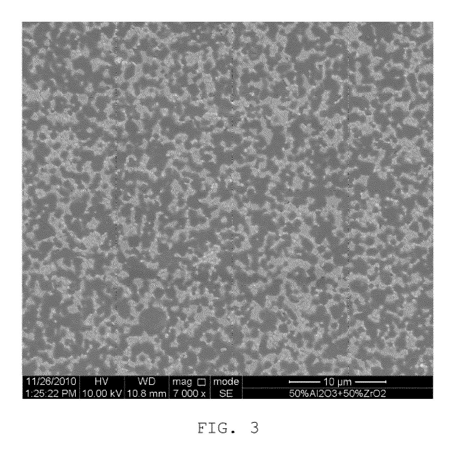

The resulting material was characterised by its real density (helium pycnometry), bulk density (Archimedes method), fracture strength (four-point bending method), toughness (KIC) and threshold stress intensity factor (KIO) (double-torsion method), and microstructural analysis (scanning electronic microscope). The results pertaining to these characterisations are shown in Table 1. The micrography obtained by electronic microscopy is represented in Figure 3.

## Claims

1. Alumina-zirconia nanostructured composite material **characterised in that** the content of elements other than Al, Zr, Hf, Y, Ce and O is less than 100 ppm, the Cl content is less than 1 ppm, at least one of the components has a mean grain size in the final material smaller than 500 nm, and at least 1/10 of the particles are in the intragranular position.

2. Nanostructured material according to claim 1, **characterised in that** it comprises:
a) between 80% and 99.5% by volume of α-alumina;
b) between 0.5% and 20% by volume of pure zirconia nanoparticles without any elements in solid solution and with a mean particle size smaller than 200 nm.

3. Nanostructured material according to claim 1, **characterised in that** it comprises:
a) between 70% and 99.5% by volume of zirconia stabilised by means of a solid solution of yttrium oxide or cerium oxide;
b) between 0.5% and 30% by volume of a-alumina nanoparticles with a mean particle size smaller than 150 nm.

4. Nanostructured material according to claim 1, **characterised in that** it comprises:
a) between 20% and 89.5% by volume of a-alumina with a particle size smaller than 500 nm;
b) between 10% and 79.5% by volume of zirconia stabilised by means of a solid solution of yttrium oxide or cerium oxide, and with a mean particle size smaller than 350 nm;
c) between 0.5% and 10% by volume of pure zirconia nanoparticles without any elements in solid solution and with a mean particle size smaller than 100 nm.

5. Nanostructured material according to any of claims 1 to 4, **characterised in that** it presents a fracture resistance under bending greater than 500 MPa, a fracture threshold greater than 4 MPam^{1/2} and a toughness greater than 6 MPam.^{1/2}.

6. Process for obtaining an alumina-zirconia nanostructured composite material with a content of elements other than Al, Zr, Hf, Y, Ce and O of less than 100 ppm, a Cl content of less than 1 ppm, and where at least one of the components has a mean grain size in the final material smaller than 500 nm, and at least 1/10 of the particles are in the intragranular position, where said process is **characterised in that** it comprises the following steps:
a) mixing at least one aqueous suspension composed of a ceramic oxide powder and a metal carbonate;
b) adjusting the pH of the mixture prepared in step (a);
c) drying the suspension obtained in step (b), to obtain a dry powder;
d) shaping the powder obtained in step (c);
e) sintering the shaped powder obtained in step (d).

7. Process according to claim 6, where the ceramic oxide powder in step (a) is α-Al₂O₃, which is mixed with zirconium carbonate in an aqueous suspension.

8. Process according to claim 6, where the ceramic oxide powder in step (a) is Ce-TZP or Y-TZP, which is mixed with aluminum carbonate in an aqueous suspension.

9. Process according to claim 6, where two aqueous suspensions are mixed, a suspension of α-Al₂O₃ with zirconium carbonate and a suspension of Ce-TZP or Y-TZP with aluminum carbonate.

10. Process according to any of claims 6 to 9, where, in step (a), the total solids content is less than 85% by weight and the mixture is kept under stirring by means of a magnetic or mechanical device that favours dispersion.

11. Process according to any of claims 6 to 10, where, in step (b), an organic or inorganic acid is added until the pH of the suspension is less than 6.

12. Process according to claim 11, where the acid used is acetic acid.

13. Process according to any of claims 6 to 12, where the drying of step (c) is performed by means of atomisation or lyophilisation.

14. Process according to any of claims 6 to 13, where step (d) is performed by means of a shaping method for ceramic suspensions selected from atmospheric casting, pressure casting and tape casting.

15. Process according to claim 14, where the shaping of step (d) is performed by means of cold isostatic pressing.

16. Process according to claim 15, where the pressure applied ranges between 100 and 400 MPa.

17. Process according to any of claims 6 to 16, where step (e) is performed at a maximum temperature ranging between 1400°C and 1600°C.

18. Use of a nanostructured material according to any of claims 1 to 17, for the manufacturing of a product selected from the group formed by knee prostheses, hip prostheses, dental implants, abutments or structures, mechanical components for pumps, alkaline batteries, ceramic components for stereotactic neurology and cutting tools.
